(19)

Europäisches
Patentamt
European
Patent Office
Office européen
des brevets

(11)  **EP 4 273 985 B1**

(12)  **EUROPEAN PATENT SPECIFICATION**

(45) Date of publication and mention
of the grant of the patent:
**24.12.2025  Bulletin 2025/52**

(21) Application number: **22898864.8**

(22) Date of filing: **26.10.2022**

(51) International Patent Classification (IPC):
*H01M 10/052* [(2010.01)]    *H01M 4/13* [(2010.01)]
*H01M 4/38* [(2006.01)]    *H01M 10/0569* [(2010.01)]
*H01M 4/02* [(2006.01)]

(52) Cooperative Patent Classification (CPC):
**H01M 4/13; H01M 4/02; H01M 4/133; H01M 4/136;
H01M 4/36; H01M 4/38; H01M 4/382;
H01M 4/5815; H01M 4/587; H01M 4/62;
H01M 10/052; H01M 10/0567; H01M 10/0568;
H01M 10/0569;** H01M 2004/021;        (Cont.)

(86) International application number:
**PCT/KR2022/016457**

(87) International publication number:
**WO 2023/096182 (01.06.2023 Gazette 2023/22)**

(54) **LITHIUM-SULFUR BATTERY WITH IMPROVED ENERGY DENSITY AND OUTPUT**

LITHIUM-SCHWEFEL-BATTERIE MIT VERBESSERTER ENERGIEDICHTE UND AUSGABE

BATTERIE AU LITHIUM-SOUFRE AVEC UNE DENSITÉ D'ÉNERGIE ET UNE SORTIE
AMÉLIORÉES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **23.11.2021  KR 20210161896**

(43) Date of publication of application:
**08.11.2023  Bulletin 2023/45**

(73) Proprietor: **LG Energy Solution, Ltd.
Seoul 07335 (KR)**

(72) Inventors:
 • **HAN, Suenghoon
   Daejeon 34122 (KR)**
 • **HONG, Kyungsik
   Daejeon 34122 (KR)**
 • **KIM, Minsu
   Daejeon 34122 (KR)**
 • **LEE, Jaegil
   Daejeon 34122 (KR)**

(74) Representative: **Goddar, Heinz J.
Boehmert & Boehmert
Anwaltspartnerschaft mbB
Pettenkoferstrasse 22
80336 München (DE)**

(56) References cited:
 WO-A1-2021/194231    KR-A- 20040 026 207
 KR-A- 20050 038 896    KR-A- 20210 088 025
 KR-A- 20210 100 313    KR-A- 20210 127 622

 • **SUN KE, LIU HELEN, GAN HONG: "Cathode
   Loading Effect on Sulfur Utilization in Lithium–
   Sulfur Battery", JOURNAL OF
   ELECTROCHEMICAL ENERGY CONVERSION
   AND STORAGE, ASME, vol. 13, no. 2, 1 May 2016
   (2016-05-01), XP093069159, ISSN: 2381-6872,
   DOI: 10.1115/1.4034738**

**(Cont. next page)**

(52) Cooperative Patent Classification (CPC): (Cont.)
H01M 2004/028; H01M 2220/20; H01M 2300/0037;
Y02E 60/10

## Description

[Technical Field]

This application claims the benefit of priority based on Korean Patent Application No. 10-2021-0161896, filed on November 23, 2021.

The present invention relates to a lithium-sulfur battery with improved energy density and power, and more particularly, to a lithium-sulfur battery with improved energy density and power, which can simultaneously realize energy density per battery weight of 300 Wh/kg or more and maximum power of 2 kW/kg or more by setting the ratio of the mass of sulfur in the positive electrode to the mass of the electrolyte and the loading value of sulfur for the positive electrode to a specific range.

[Background Art]

As interest in energy storage technology continues to increase, since its application is expanding from energy for mobile phones, tablets, laptops and camcorders to even energy for electric vehicles (EVs) and hybrid electric vehicles (HEVs), research and development of electrochemical devices are gradually increasing. The field of electrochemical devices is an area that is receiving the most attention in this respect. Among them, the development of secondary batteries such as a lithium-sulfur battery capable of being charged/discharged has become a focus of attention. In recent years, in developing these batteries, in order to improve capacity density and specific energy, it has led to research and development in designs for new electrodes and batteries.

Among these electrochemical devices, a lithium-sulfur battery (Li-S battery) in which sulfur is used as a positive electrode active material has a high energy density per weight (Specific Energy Density), and thus is in the spotlight as a next-generation secondary battery that can replace a lithium-ion battery. In such a lithium-sulfur battery, a reduction reaction of sulfur and an oxidation reaction of lithium metal occur during the discharging. At that time, sulfur forms lithium polysulfide (LiPS) having a linear structure from $S_8$ having a ring structure. This lithium-sulfur battery is characterized by showing a stepwise discharging voltage until the polysulfide is completely reduced to $Li_2S$.

However, one of the obstacles to commercialization of the lithium-sulfur battery is that the power is low due to the electrochemical conversion reaction of sulfur comprised as a positive electrode active material. On the other hand, in the existing lithium-ion battery, the intercalation reaction in which lithium ions are inserted into the positive electrode/negative electrode structure is proceeded, and thus the power is relatively higher than that of the lithium-sulfur battery. However, as described above, the lithium-sulfur battery (Li-S battery) has a high energy density per weight, and has also the advantage of having a higher energy density per weight compared to the lithium-ion battery.

Therefore, it is necessary to change the design of the lithium-sulfur battery to have maximum power at the same energy density per weight. In addition, particularly, in order to apply to aircraft used in service systems such as an urban air mobility (UAM), it is necessary to increase the energy density per weight to more than 300 Wh/kg (the lithium-ion battery is less than 300 Wh/kg), and at the same time, it is also necessary to increase the maximum power to the normally required 2 kW/kg or more.

[Disclosure]

[Technical Problem]

Therefore, it is an object of the present invention to provide a lithium-sulfur battery with improved energy density and power, which can simultaneously realize energy density per battery weight of 300 Wh/kg or more and maximum power of 2 kW/kg or more by setting the ratio of the mass of sulfur in the positive electrode to the mass of the electrolyte and the loading value of sulfur for the positive electrode to a specific range.

[Technical Solution]

In order to achieve the above object, the present invention provides a lithium-sulfur battery comprising a positive electrode containing sulfur as a positive electrode active material, a lithium metal negative electrode, and an electrolyte, wherein the battery satisfies Equation 1 below:

[Equation 1]

$$1 \leq ES/L \leq 1.4$$

wherein ES is the value obtained by dividing the mass (g) of the electrolyte by the mass (g) of sulfur contained in the positive electrode, and L is the loading value of sulfur for the positive electrode and its unit is mAh/cm$^2$.

[Advantageous Effects]

According to the lithium-sulfur battery with improved energy density and power according to the present invention, the lithium-sulfur battery has the advantage of simultaneously realizing energy density per battery weight of 300 Wh/kg or more and maximum power of 2 kW/kg or more by setting the ratio of the mass of sulfur in the positive electrode to the mass of the electrolyte and the loading value of sulfur for the positive electrode to a specific range.

[Description of Drawings]

FIG. 1 is a graph showing the ES/L value depending on the loading value of sulfur for the positive electrode.
FIG. 2 is a graph showing the ES/L value depending on the loading value of sulfur for the positive electrode.
FIG. 3 is a graph showing the energy density and power of a lithium-sulfur battery in connection with the ES/L value.
FIG. 4 is a graph showing the power of the lithium-sulfur battery in connection with the ES/L value.

[Best Mode]

Hereinafter, the present invention will be described in detail.
The lithium-sulfur battery with improved energy density and power according to the present invention comprises a positive electrode containing sulfur as a positive electrode active material, a lithium metal negative electrode, and an electrolyte, wherein the battery satisfies Equation 1 below.

$$[\text{Equation 1}]$$

$$1 \leq ES/L \leq 1.4$$

wherein ES is the value obtained by dividing the mass (g) of the electrolyte by the mass (g) of sulfur contained in the positive electrode, and L is the loading value of sulfur for the positive electrode and its unit is mAh/cm$^2$.
Among these electrochemical devices, a lithium-sulfur battery (Li-S battery) in which sulfur is used as a positive electrode active material has a high energy density per weight (Specific Energy Density), and thus is in the spotlight as a next-generation secondary battery that can replace a lithium-ion battery. However, the lithium-sulfur battery has a problem of low power due to the electrochemical conversion reaction of sulfur included as a positive electrode active material. On the other hand, in the existing lithium-ion battery, the intercalation reaction in which lithium ions are inserted into the positive electrode/negative electrode structure is proceeded, and thus the power is relatively higher than that of the lithium-sulfur battery. However, as described above, the lithium-sulfur battery (Li-S battery) has a high energy density per weight, and has also the advantage of having a higher energy density per weight compared to the lithium-ion battery (the energy density per weight of the lithium-ion battery is less than 300 Wh/kg).
Accordingly, the applicant of the present invention has changed the design of the lithium-sulfur battery to have maximum power at the same energy density per weight, and in particular, in order to apply to aircraft used in service systems such as an urban air mobility (UAM), the applicant of the present invention has developed a lithium-sulfur battery in which the energy density per weight was increased to more than 300 Wh/kg, and at the same time, the maximum power was increased to the normally required 2 kW/kg or more.
Hereinafter, the present invention will be described in more detail.
As described above, the lithium-sulfur battery of the present invention with improved energy density and power satisfies Equation 1 below.

$$[\text{Equation 1}]$$

$$1 \leq ES/L \leq 1.4$$

wherein ES is the value obtained by dividing the mass (g) of the electrolyte by the mass (g) of sulfur contained in the positive electrode, and L is the loading value (unit: mAh/cm$^2$) of sulfur for the positive electrode. In addition, if the value of ES/L is less than 1, there is a problem in that the content of electrolyte is reduced, resulting in a large overvoltage and a rapid decrease in the power. In addition, if the value of ES/L exceeds 1.4, there is a problem that the energy density per weight of the battery is decreased.

In this case, the value of ES is preferably within the range of $2 \leq ES < 3.7$. In addition, the value of L is preferably within the range of $2 \leq L \leq 2.6$. Accordingly, if the value of L is 2, the value of ES should be within the range of $2 \leq ES \leq 2.8$, and if the value of L is 2.6, the value of ES should be within the range of $2.6 \leq ES \leq 3.64$. If the value of ES is less than 2, the energy density of the battery may be high, but the power is rapidly reduced. In addition, if the value of ES is 3.7 or more, the power of the battery may be high, but there is a problem that the energy density is not formed higher than the energy density (less than 300 Wh/kg) of the lithium-ion battery.

As described above, if the value of ES/L comes within the range of $1 \leq ES/L \leq 1.4$ by setting the range of the ES value and the range of the L value, the energy density of the lithium-sulfur battery is 300 Wh/kg or more, and at the same time, the maximum power is also the normally required 2 kW/kg or more, and thus at the same energy density per weight, the battery can become a lithium-sulfur battery with maximum power. Specific experimental data related to this will be shown in Examples to be described later.

More specifically, when the value of L is $2 \leq L < 2.5$, the energy density of the battery is 300 Wh/kg or more and less than 350 Wh/kg. Also, in this case, the value of power is 2 to 2.6 kW/kg. In addition, if the value of L is $2.5 \leq L \leq 2.6$, the energy density of the battery is 300 to 350 Wh/kg. Also, in this case, the value of power is greater than 2 kW/kg to 2.6 kW/kg. In addition, if the value of ES/L is 1 and the value of L is $2.5 \leq L \leq 2.6$, the energy density of the battery is 350 Wh/kg. Also, in this case, the value of power is from exceeding 2 kW/kg to 2.3 kW/kg.

Hereinafter, each of the electrolyte, positive electrode, negative electrode, and separator comprised in the lithium-sulfur battery of the present invention will be described in detail.

First, the electrolyte contained in the lithium-sulfur battery of the present invention comprises a first solvent, a second solvent, and a lithium salt. The first solvent comprises a heterocyclic compound containing one or more double bonds and at the same time containing any one of an oxygen atom and a sulfur atom. Since the heterocyclic compound has the property of being difficult to dissolve salts due to the delocalization of the lone pair electrons of the heteroatom (oxygen atom or sulfur atom), a polymer protective film (solid electrolyte interface, SEI layer) is formed on the surface of a lithium-based metal (negative electrode) by a ring opening reaction of a heterocyclic compound in the initial discharging stage of the battery, and thus it is possible to suppress the formation of lithium dendrite, and furthermore, it is possible to improve the lifetime characteristics of the lithium-sulfur battery by reducing the decomposition of the electrolyte solution on the surface of lithium-based metal and subsequent side reactions.

That is, the heterocyclic compound of the present invention comprises at least one double bond in order to form a polymeric protective film on the surface of a lithium-based metal, and contains also a heteroatom (oxygen atom or sulfur atom) in order to exhibit effects such as increasing affinity with other solvents in the electrolyte solution by making it polar.

The heterocyclic compound may be a 3 to 15 membered, preferably 3 to 7 membered, more preferably 5 to 6 membered heterocyclic compounds. In addition, the heterocyclic compound may be a heterocyclic compound substituted or unsubstituted by at least one selected from the group consisting of an alkyl group having 1 to 4 carbon atoms, a cyclic alkyl group having 3 to 8 carbon atoms, an aryl group having 6 to 10 carbon atoms, a halogen group, a nitro group ($-NO_2$), an amine group ($-NH_2$), and a sulfonyl group ($-SO_2$). In addition, the heterocyclic compound may be a multicyclic compound of a heterocyclic compound and at least one of a cyclic alkyl group having 3 to 8 carbon atoms and an aryl group having 6 to 10 carbon atoms.

When the heterocyclic compound is substituted with an alkyl group having 1 to 4 carbon atoms, it is preferable because radicals are stabilized and side reactions between electrolyte solutions can be suppressed. In addition, when substituted with a halogen group or a nitro group, it is preferable because a functional protective film can be formed on the surface of a lithium-based metal, and at this time, the formed functional protective film is stable as a compact protective film, enables uniform deposition of the lithium-based metal, and has an advantage in that it can suppress a side reaction between polysulfide and the lithium-based metal.

Specific examples of the heterocyclic compound may comprise at least one selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene and 2,5-dimethylthiophene, and among them, it is preferable to use 2-methylfuran as the first solvent.

The first solvent comprising this heterocyclic compound may be contained in a volume ratio of 5 or more and less than 95, preferably in a volume ratio of 10 to 80, and more preferably in a volume ratio of 15 to 60, relative to 100 volume ratio of the total organic solvent (i.e., the first solvent + the second solvent) comprised in the electrolyte solution for the lithium secondary battery of the present invention (the remaining volume ratio corresponds to the second solvent). If the first solvent is contained in a volume ratio of less than 5 relative to 100 volume ratio of the total organic solvent comprised in the electrolyte, the ability to reduce the leaching amount of polysulfide is lowered, and thus there may be a problem that the increase in resistance of the electrolyte solution cannot be suppressed, or the protective film is not completely formed on the surface of lithium-based metal. In addition, if the first solvent is contained in a volume ratio of 95 or more relative to 100 volume ratio of the total organic solvent of the present invention, there is a concern that the capacity and lifetime of the battery may be decreased due to the increase in the surface resistance of the electrolyte solution and lithium-based metal.

The second solvent comprises at least one of an ether-based compound, an ester-based compound, an amide-based compound, and a carbonate-based compound. The second solvent serves not only to dissolve the lithium salt so that the electrolyte solution has lithium-ion conductivity, but also to elutes sulfur, which is a positive electrode active material, and thus smoothly conduct an electrochemical reaction with lithium. The carbonate-based compound may be a linear carbonate-based compound or a cyclic carbonate-based compound.

Specific examples of the ether-based compound may be, but are not limited to, at least one selected from the group consisting of dimethyl ether, diethyl ether, dipropyl ether, methylethyl ether, methylpropyl ether, ethylpropyl ether, dimethoxyethane, diethoxyethane, methoxyethoxyethane, diethylene glycol dimethyl ether, diethylene glycol diethyl ether, diethylene glycol methylethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, polyethylene glycol diethyl ether, and polyethylene glycol methylethyl ether, and among them, it is preferable to use dimethoxyethane as the second solvent.

In addition, the ester-based compound may be, but is not limited to, at least one selected from the group consisting of methyl acetate, ethyl acetate, propyl acetate, methyl propionate, ethyl propionate, propyl propionate, $\gamma$-butyrolactone, $\gamma$-valerolactone, $\gamma$-caprolactone, $\sigma$-valerolactone and $\varepsilon$-caprolactone. In addition, the amide-based compound may be a conventional amide-based compound used in the art.

In addition, the linear carbonate-based compound may be, but is not limited to, at least one selected from the group consisting of dimethyl carbonate (DMC), diethyl carbonate (DEC), dipropyl carbonate (DPC), ethylmethyl carbonate (EMC), methylpropyl carbonate (MPC), and ethylpropyl carbonate (EPC).

In addition, the cyclic carbonate-based compound may be, but is not limited to, at least one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, and halides thereof (fluoroethylene carbonate (FEC), etc.).

The lithium salt is an electrolyte salt used to increase ion conductivity, and may be used without limitation as long as it is commonly used in the art. Specific examples of the lithium salt may be at least one from the group consisting of LiCl, LiBr, LiI, LiClO$_4$, LiBF$_4$, LiB$_{10}$Cl$_{10}$, LiPF$_6$, LiCF$_3$SO$_3$, LiCF$_3$CO$_2$, LiC$_4$BO$_8$, LiAsF$_6$, LiSbF$_6$, LiAlCl$_4$, CH$_3$SO$_3$Li, CF$_3$SO$_3$Li, (CF$_3$SO$_2$)$_2$NLi, (C$_2$F$_5$SO$_2$)$_2$NLi, (SO$_2$F)$_2$NLi, (CF$_3$SO$_2$)$_3$CLi, lithium chloroborane, lithium lower aliphatic carboxylic acid having 4 or less carbon atoms, lithium borate and lithium imide, and among them, it is preferable to use LiFSI((SO$_2$F)$_2$NLi). In addition, as an embodiment of the present invention, the electrolyte solution may be in a form that does not comprise LiTFSI((CF$_3$SO$_2$)$_2$NLi).

The concentration of the lithium salt may be determined in consideration of ion conductivity and the like, and may be, for example, 0.1 to 4 M, preferably 0.2 to 2 M, more preferably 0.5 to 2 M. If the concentration of the lithium salt is less than the range above, it is difficult to ensure ion conductivity suitable for operating the battery. If the concentration of the lithium salt exceeds the range above, the viscosity of the electrolyte is increased, so that the mobility of lithium ions is deteriorated, or the decomposition reaction of the lithium salt itself is increased, thereby deteriorating the performance of the battery.

In addition, the lithium salt may be contained in an amount of 2 to 45% by weight, preferably 4 to 30% by weight, and more preferably 8 to 25% by weight, relative to the total weight of the electrolyte. If the lithium salt is contained in an amount of less than 2% by weight relative to the total weight of the electrolyte, there is a concern that the problem of increasing ion transfer resistance may occur due to insufficient lithium-ion conductivity. If the lithium salt exceeds 45% by weight, likewise, there may be a problem that the lithium-ion conductivity decreases, and at the same time, the viscosity of the electrolyte increases, thereby increasing the mass transfer resistance.

In addition, the electrolyte included in the lithium-sulfur battery of the present invention may, if necessary, further comprise at least one additive selected from the group consisting of lithium nitrate (LiNO$_3$), potassium nitrate (KNO$_3$), cesium nitrate (CsNO$_3$), magnesium nitrate (Mg(NO$_3$)$_2$),(Ba(NO$_3$)$_2$),$_2$), potassium nitrite (KNO$_2$), and cesium nitrite (CsNO$_2$).

Next, the positive electrode comprised in the lithium-sulfur battery of the present invention comprises a positive electrode active material and a binder, but does not comprise an electrically conductive material commonly used with a positive electrode active material and a binder to enable the implementation of a lithium-sulfur battery with an energy density of 300 Wh/kg or more. In other words, the positive electrode comprises a positive electrode active material and a binder, and does not comprise an electrically conductive material other than a carbon material comprised in the positive electrode active material. In addition, the positive electrode may be one in which a base solid containing a positive electrode active material and a binder is located on a current collector.

The positive electrode active material may be one that can be applied to a conventional lithium secondary battery, and for example may comprise elemental sulfur (S$_8$), a sulfur-based compound, or a mixture thereof. Specifically, the sulfur-based compound may be Li$_2$S$_n$ (n$\geq$1), an organosulfur compound or a carbon-sulfur composite ((C$_2$S$_x$)$_n$: x=2.5~50, n$\geq$2)). In addition, the positive electrode active material may preferably comprise a sulfur-carbon composite.

The sulfur-carbon composite may have a particle size of 1 to 100 $\mu$m. If the particle size of the sulfur-carbon composite is less than 1 $\mu$m, there is a problem that the resistance between the particles increases and an overvoltage occurs in the electrode of the lithium-sulfur battery. If the particle size exceeds 100 $\mu$m, the surface area per unit weight is reduced, and thus the wetting area with the electrolyte in the electrode and the reaction site with the lithium ion are decreased, and the amount of electron transfer relative to the size of the composite is reduced, so that the reaction can be delayed, and as a result, the discharging capacity of the battery can be reduced.

The sulfur (S) may be contained in an amount of 60 to 80% by weight, preferably 67.5 to 75% by weight, based on the total weight of the positive electrode. The content of sulfur in the positive electrode of a conventional lithium-sulfur battery is about 40 to 60% by weight relative to the total weight of the positive electrode, but despite a fact that the present invention uses sulfur in a significantly higher content than this, the present invention shows an initial discharge capacity of about 1,550 mAh/g or more under the condition of the electrolyte of the present invention. If the sulfur is used in an amount of less than 60% by weight with respect to the total weight of the positive electrode, there may be a problem that the energy density of the battery is decreased. If the sulfur is used in an amount exceeding 80% by weight, there may be a problem that the conductivity in the electrode is lowered and the stability of the electrode is lowered.

The carbon material (or sulfur supporting material) constituting the sulfur-carbon composite has porosity, and particularly, since the carbon material used as the positive electrode active material of the present invention has the characteristics of a high specific surface area (3,000 $m^2$/g or more) and high porosity (pore volume: 0.7 ~ 3 $cm^3$/g), it is possible to operate with high capacity (1,575 ~ 1,675 mAh/g) in the above electrolyte.

As the porous carbon material, all carbon materials satisfying a pore volume of 0.7 ~ 3 $cm^3$/g can be exemplified, and specifically, at least one selected from the group consisting of graphite; graphene; reduced graphene oxide(rGO); carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); and activated carbon satisfying a pore volume of 0.7 ~ 3 $cm^3$/g may be exemplified, and its shape may be spherical, rod-shaped, needle-shaped, plate-shaped, tubular or bulk-shaped.

The positive electrode active material including sulfur and carbon material may be comprised in an amount of 80 to 99 parts by weight, and preferably 85 to 97 parts by weight, based on 100 parts by weight of the total weight of the positive electrode. If the content of the positive electrode active material is less than 80 parts by weight with respect to 100 parts by weight of the total weight of the positive electrode, there is a problem that the energy density of the battery is reduced. If the content of the positive electrode active material exceeds 99 parts by weight, there may be a problem that the stability of the electrode is lowered.

The binder is a component that assists in the bonding between positive electrode active material and current collector, etc., and for example, may be, but is not limited to, at least one selected from the group consisting of polyvinylidenefluoride (PVdF), polyvinylidenefluoride-polyhexafluoropropylene copolymer (PVdF/HFP), polyvinyl acetate, polyvinylalcohol, polyvinylether, polyethylene, polyethyleneoxide, alkylated polyethyleneoxide, polypropylene, polymethyl(meth)acrylate, polyethyl(meth)acrylate, polytetrafluoroethylene (PTFE), polyvinylchloride, polyacrylonitrile, polyvinylpyridine, polyvinylpyrrolidone, styrenebutadiene rubber, acrylonitrile-butadiene rubber, ethylene-propylene-diene monomer (EPDM) rubber, sulfonated EPDM rubber, styrene-butylene rubber, fluorine rubber, carboxymethylcellulose (CMC), starch, hydroxypropyl cellulose, regenerated cellulose, and mixtures thereof.

The binder is usually added in an amount of 1 to 15 parts by weight, based on 100 parts by weight of the total weight of the positive electrode. If the content of the binder is less than 1 part by weight, the adhesive strength between the positive electrode active material and the current collector may be insufficient. If the content of the binder is more than 15 parts by weight, the adhesive strength is improved, but the content of the positive electrode active material may be reduced accordingly, thereby lowering the capacity of the battery.

In addition, a filler may be selectively added to the positive electrode of the present invention as a component for inhibiting the expansion of the positive electrode. Such a filler is not particularly limited as long as it can inhibit the expansion of the electrode without causing chemical changes in the battery, and examples thereof may comprise olefinic polymers such as polyethylene and polypropylene; fibrous materials such as glass fibers and carbon fibers.

The positive electrode active material and the binder are dispersed and mixed in a dispersion medium (solvent) to form a slurry, and the slurry can be applied onto the positive electrode current collector, followed by drying and rolling it to prepare a positive electrode. The dispersion medium may be, but is not limited to, N-methyl-2-pyrrolidone (NMP), dimethyl formamide (DMF), dimethyl sulfoxide (DMSO), ethanol, isopropanol, water, or a mixture thereof.

The positive electrode current collector may be, but is not necessarily limited to, platinum (Pt), gold (Au), palladium (Pd), iridium (Ir), silver (Ag), ruthenium (Ru), nickel (Ni), stainless steel (STS), aluminum (Al), molybdenum (Mo), chromium (Cr), carbon (C), titanium (Ti), tungsten (W), ITO (In doped $SnO_2$), FTO (F doped $SnO_2$), or an alloy thereof, or aluminum (Al) or stainless steel whose surface is treated with carbon (C), nickel (Ni), titanium (Ti) or silver (Ag) or so on. The shape of the positive electrode current collector may be in the form of a foil, film, sheet, punched form, porous body, foam or the like.

The negative electrode is a lithium-based metal, and may further include a current collector on one side of the lithium-based metal. The current collector may be a negative electrode current collector. The negative electrode current collector is not particularly limited as long as it has high electrical conductivity without causing chemical changes in the battery, and may be selected from the group consisting of copper, aluminum, stainless steel, zinc, titanium, silver, palladium, nickel, iron, chromium, and alloys and combinations thereof. The stainless steel can be surface-treated with carbon, nickel, titanium, or silver, and the alloy may be an aluminum-cadmium alloy. In addition, sintered carbon, a non-conductive polymer surface-treated with an electrically conductive material or a conductive polymer may be used. In general, a thin copper foil is used as the negative electrode current collector.

In addition, the shape of the negative electrode current collector can be various forms such as a film having or not having fine irregularities on its surface, sheet, foil, net, porous body, foam, nonwoven fabric and the like. In addition, the thickness of the negative electrode current collector is in the thickness range of 3 to 50 $\mu$m. If the thickness of the negative electrode current collector is less than 3 $\mu$m, the current collecting effect is lowered. On the other hand, if the thickness exceeds 50 $\mu$m, when folding and then assembling the cell, there is a problem that the workability is reduced.

The lithium-based metal may be lithium or a lithium alloy. In that case, the lithium alloy contains an element capable of alloying with lithium, and specifically the lithium alloy may be an alloy of lithium and at least one selected from the group consisting of Si, Sn, C, Pt, Ir, Ni, Cu, Ti, Na, K, Rb, Cs, Fr, Be, Mg, Ca, Sr, Sb, Pb, In, Zn, Ba, Ra, Ge, and Al. The lithium-based metal may be in the form of a sheet or foil, and in some cases, may be in a form in which lithium or a lithium alloy is deposited or coated on a current collector by a dry process, or may be in a form in which metal and an alloy in a particle phase are deposited or coated by a wet process or the like.

A conventional separator may be interposed between the positive electrode and the negative electrode. The separator is a physical separator having a function of physically separating the electrodes, and can be used without a particular limitation as long as it is used as a conventional separator, and particularly, a separator with low resistance to ion migration in the electrolyte and excellent impregnating ability for the electrolyte solution is preferable. In addition, the separator enables the transport of lithium ions between the positive electrode and the negative electrode while separating or insulating the positive electrode and the negative electrode from each other. The separator may be made of a porous, nonconductive, or insulating material. The separator may be an independent member such as a film or a coating layer added to the positive electrode and/or the negative electrode.

Examples of the polyolefin-based porous film which can be used as the separator may be films formed of any polymer alone selected from polyethylene such as high-density polyethylene, linear low-density polyethylene, low-density polyethylene, and ultra-high molecular weight polyethylene, and polyolefin-based polymers such as polypropylene, polybutylene, and polypentene, or formed of a polymer mixture thereof. Examples of the nonwoven fabric that can be used as the separator is a nonwoven fabric formed by a polymer of polyphenyleneoxide, polyimide, polyamide, polycarbonate, polyethyleneterephthalate, polyethylenenaphthalate, polybutyleneterephthalate, polyphenylenesulfide, polyacetal, polyethersulfone, polyetheretherketone, polyester and the like alone or a mixture thereof. Such nonwoven fabrics include a nonwoven fabric in the form of a fiber to form a porous web, that is, a spun-bond or a melt-blown nonwoven fabric composed of long fibers.

The thickness of the separator is not particularly limited, but is preferably in the range of 1 to 100 $\mu$m, and more preferably 5 to 50$\mu$m. If the thickness of the separator is less than 1 $\mu$m, the mechanical properties cannot be maintained. If the thickness of the separator exceeds 100 $\mu$m, the separator acts as a resistive layer, thereby deteriorating the performance of the battery. The pore size and porosity of the separator are not particularly limited, but it is preferable that the pore size is 0.1 to 50 $\mu$m and the porosity is 10 to 95%. If the separator has a pore size of less than 0.1 $\mu$m or a porosity of less than 10%, the separator acts as a resistive layer. If the separator has a pore size exceeding 50 $\mu$m or a porosity exceeding 95%, mechanical properties cannot be maintained.

The lithium-sulfur battery of the present invention comprising the electrolyte, the positive electrode, the negative electrode, and the separator as described above can be manufactured through a process of facing the positive electrode with the negative electrode, interposing the separator between them, and then injecting the electrolyte solution.

On the other hand, the lithium-sulfur battery according to the present invention is applied to a battery cell used as a power source for a small device, and can be also particularly suitably used as a unit cell for a battery module, which is a power source for medium and large-sized devices. In this aspect, the present invention also provides a battery module comprising two or more lithium-sulfur batteries electrically connected (series or parallel). Of course, the quantity of lithium-sulfur batteries comprised in the battery module may be variously adjusted in consideration of the use and capacity of the battery module. Furthermore, the present invention provides a battery pack in which the battery modules are electrically connected according to a conventional technique in the art. The battery module and the battery pack may be used as a power source for any one or more medium and large-sized devices among a power tool; electric vehicles including electric vehicle (EV), a hybrid electric vehicle (HEV), and a plug-in hybrid electric vehicle (PHEV); electric truck; electric commercial vehicles; or power storage systems, but are not limited thereto. However, it may be preferable that the lithium-sulfur battery of the present invention is a battery for an aircraft used as an urban air mobility (UAM).

Hereinafter, preferred examples are presented to aid understanding of the present invention, but the following examples are merely illustrative of the present invention, and it is obvious to those skilled in the art that various changes and modifications are possible within the scope and spirit of the present invention, and it goes without saying that that these changes and modifications fall within the scope of the appended claims.

[Manufacturing Example] Manufacture of lithium-sulfur battery

Preparation of electrolyte

First, LiFSI (lithium salt) was dissolved in the organic solvent obtained by mixing the 2-methyl furan (first solvent) and dimethoxyethane (second solvent) with a volume ratio (v/v) **of 5:5,** so that the concentration of LiFSI was 0.75 M, to prepare an electrolyte.

Manufacture of positive electrode

95 parts by weight of a sulfur-carbon composite (S:C = 70:30 weight ratio) as a positive electrode active material (the content of sulfur alone was set to be 67.5% by weight based on the total weight of the positive electrode, and as the carbon material, activated carbon having a pore volume of 1.8 $cm^3$/g was used), and 5 parts by weight of styrene butadiene rubber/carboxymethyl cellulose (SBR:CMC = 7:3) as a binder were mixed to prepare a slurry composition for a positive electrode, and then, the prepared slurry composition was coated on a current collector (Al foil), dried at 50 °C for 12 hours, and pressurized with a roll press to prepare a positive electrode (at this time, the porosity of the electrode was set to 65%).

Manufacture of lithium-sulfur battery

The prepared positive electrode and the lithium metal negative electrode having a thickness of 150 $\mu$m are positioned to face each other, and a polyethylene (PE) separator is interposed therebetween, and the prepared electrolyte is injected to manufacture a coin cell type lithium-sulfur battery. Meanwhile, in the manufacture of the battery, the positive electrode was punched with 15phi and used, and a polyethylene separator was punched with 19phi and used, and the lithium metal was punched with 16phi and used.

[Example] Manufacture of lithium-sulfur battery

It was based on the lithium-sulfur battery manufactured in the above manufacturing example, but the value of ES (mass(g) of electrolyte/mass(g) of sulfur contained in positive electrode: $2 \leq ES < 3.7$) and the value of L (unit: mAh/cm$^2$) (loading value of sulfur for positive electrode: $2 \leq L \leq 2.6$) in Equation 1 below were set to satisfy Equation 1 below (the loading value of sulfur for the positive electrode is a value obtained by measuring the weight of the positive electrode punched out with 15 phi and converting it according to the Formula).

$$[\text{Equation 1}]$$

$$1 \leq ES/L \leq 1.4$$

[Comparative Example] Manufacture of lithium-sulfur battery

It was based on the lithium-sulfur battery manufactured in the above manufacturing example, but the value of ES (mass (g) of electrolyte/mass (g) of sulfur contained in positive electrode) in Equation 1 above was set to deviate from $2 \leq ES < 3.7$, and the value of L (unit: mAh/cm$^2$) (loading value of sulfur for the positive electrode) was set to deviate from $2 \leq L \leq 2.6$.

[Experimental Example 1] Evaluation of power of lithium-sulfur battery

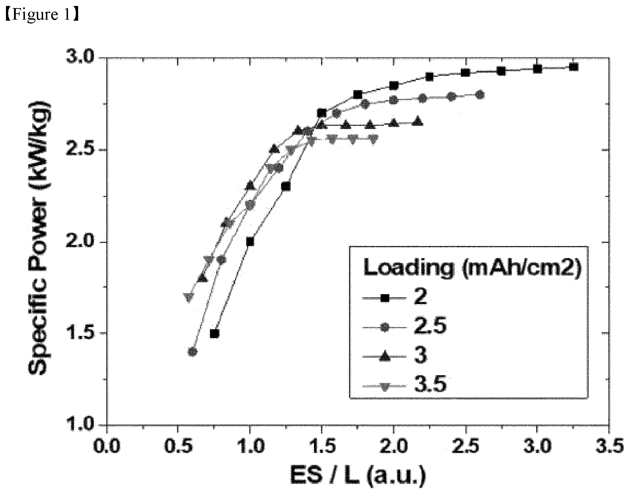

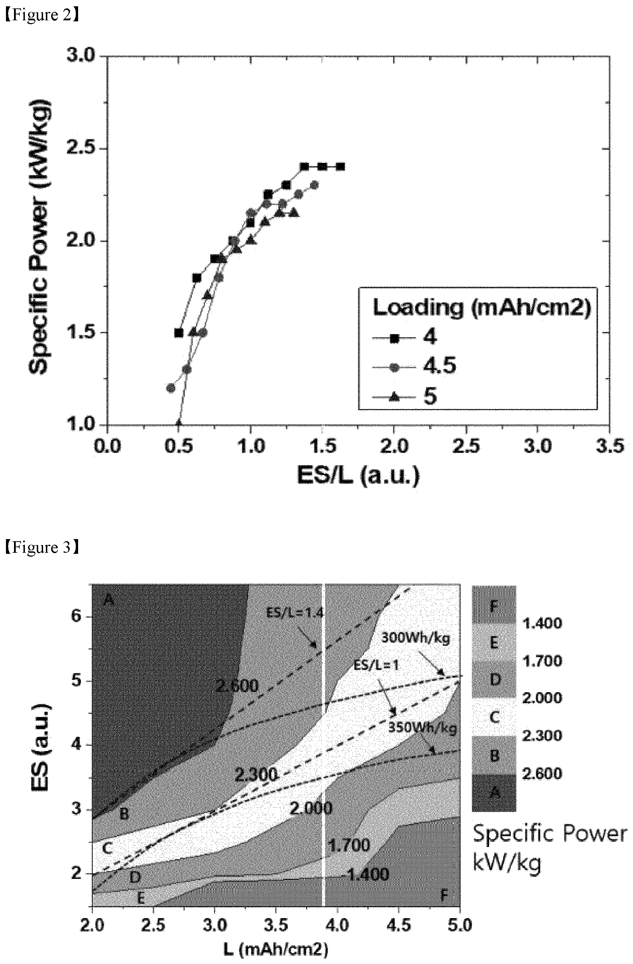

The resistance of the lithium-sulfur batteries of the Example and Comparative Example was measured through a voltage drop through a 10-second discharging at 2C at 75% of the remaining capacity based on the 0.1C discharging capacity, and through this, the maximum power that can be produced when discharged to 1.5 V was converted. FIGS. 1 and 2 are graphs showing the value of ES/L according to the loading value of sulfur for the positive electrode. As shown in FIG. 1, it can be seen that the value of ES/L has an inflection point between about 1 and 1.4, and as the value of ES/L exceeds 1.4, the amount of increase in power is reduced. In addition, it was confirmed that if the value of L is 2 and 2.5, the power increases particularly rapidly, so it is excellent as the power of a lithium-sulfur battery. Meanwhile, as shown in FIG. 2, the value of L was 4 or more, the value of the power did not reach 2 kW/kg at the points where the power increased steeply. Therefore, it can be seen that the optimal value of ES/L is $1 \leq ES/L \leq 1.4$, and at this time, it is preferable that the value of L is within the range of $2 \leq L \leq 2.6$.

[Experimental Example 2] Evaluation of energy density and power of lithium-sulfur battery

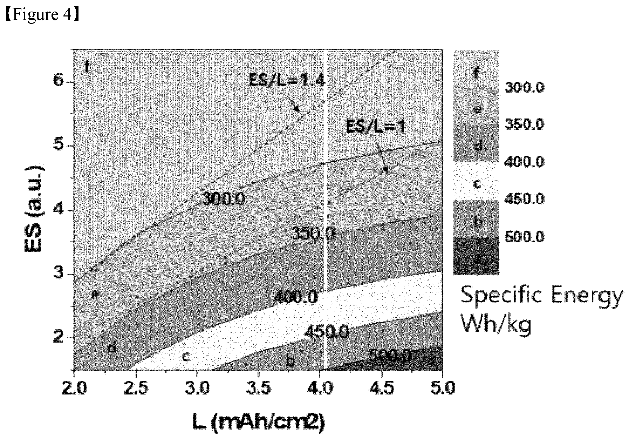

The resistance of the lithium-sulfur batteries of the Example and Comparative Example was measured through a voltage drop through a 10-second discharging at 2C at 75% of the remaining capacity based on the 0.1C discharging capacity, and through this, the maximum power (unit: kW/kg) that can be produced when discharged to 1.5 V was converted, and the results are shown in Table 1 below. In addition, for the lithium-sulfur batteries of the Examples and Comparative Examples, the energy measured at 0.1C discharge (lower limit voltage of 1.7 V) was measured, and then divided by the weight of the cell to determine the energy density per weight (unit: Wh/kg), and the results are shown in Table 2 below. FIG. 3 is a graph showing the energy density and power of the lithium-sulfur battery in connection with the value of ES/L, and FIG 4 is a graph showing the power of the lithium-sulfur battery in connection with the value of ES/L.

Table 1:

| L \ ES | 1.5 | 2 | 2.5 | 3 | 3.5 | 4 | 4.5 | 5 | 5.5 | 6 | 6.5 |
|---|---|---|---|---|---|---|---|---|---|---|---|
| 2 | 1.5 | 2 | 2.3 | 2.7 | 2.8 | 2.85 | 2.9 | 2.92 | 2.93 | 2.94 | 2.95 |
| 2.5 | 1.4 | 1.9 | 2.2 | 2.4 | 2.6 | 2.7 | 2.75 | 2.77 | 2.78 | 2.79 | 2.8 |
| 3 | | 1.8 | 2.1 | 2.3 | 2.5 | 2.6 | 2.63 | 2.63 | 2.63 | 2.64 | 2.65 |
| 3.5 | | 1.7 | 1.9 | 2.1 | 2.2 | 2.4 | 2.5 | 2.55 | 2.56 | 2.56 | 2.56 |
| 4 | | 1.5 | 1.8 | 1.9 | 2 | 2.1 | 2.25 | 2.3 | 2.4 | 2.4 | 2.4 |
| 4.5 | | 1.2 | 1.3 | 1.5 | 1.8 | 2 | 2.15 | 2.2 | 2.2 | 2.25 | 2.3 |
| 5 | | | 1 | 1.5 | 1.7 | 1.9 | 1.95 | 2 | 2.1 | 2.15 | 2.15 |

Table 2:

| L \ ES | 1.5 | 2 | 2.5 | 3 | 3.5 | 4 | 4.5 | 5 | 5.5 | 6 | 6.5 |
|---|---|---|---|---|---|---|---|---|---|---|---|
| 2 | 362 | 336 | 314 | 295 | 278 | 263 | 249 | 237 | 226 | 216 | 206 |
| 2.5 | 407 | 375 | 348 | 324 | 304 | 286 | 270 | 255 | 242 | 231 | 220 |
| 3 | 443 | 406 | 374 | 347 | 324 | 303 | 285 | 269 | 255 | 242 | 231 |
| 3.5 | 474 | 431 | 396 | 366 | 340 | 317 | 298 | 280 | 265 | 251 | 239 |
| 4 | 500 | 453 | 414 | 381 | 353 | 329 | 308 | 289 | 273 | 258 | 245 |
| 4.5 | 522 | 471 | 429 | 394 | 364 | 338 | 316 | 296 | 279 | 264 | 250 |
| 5 | 541 | 486 | 442 | 404 | 373 | 346 | 323 | 303 | 285 | 269 | 254 |

Previously, it was confirmed through Experimental Example 1 related to the power of the lithium-sulfur battery that the optimal value of ES/L is $1 \leq ES/L \leq 1.4$, and at this time, it is preferable that the value of L is within the range of $2 \leq L \leq 2.6$. In addition, as shown in Tables 1 and 2 above, and as shown in FIGS. 3 and 4, it can be seen that even then considering the energy density of the lithium-sulfur battery, it is preferable that the value of ES/L and the value of L are within the above range. Specifically, if the value of L is $2 \leq L < 2.5$, the energy density of the battery is 300 Wh/kg or more and less than 350 Wh/kg, and at that time, the power value is 2 to 2.6 kW/kg. In addition, if the value of L is $2.5 \leq L \leq 2.6$, the energy density of the battery is 300 to 350 Wh/kg, and at that time, the power value is from exceeding 2 kW/kg to 2.6 kW/kg. In addition, if the value of ES/L is 1 and the value of L is $2.5 \leq L \leq 2.6$, the energy density of the battery is 350 Wh/kg, and at that time, the power value is from exceeding 2 kW/kg to 2.3 kW/kg.

Therefore, if the value of ES/L, when the value of ES is within the range of $2 \leq ES < 3.7$ and the value of L is within the range of $2 \leq L \leq 2.6$, satisfies $1 \leq ES/L \leq 1.4$, the energy density per weight of the lithium-sulfur battery is 300 Wh/kg or more, and at the same time, the maximum power is also 2 kW/kg or more, which is normally required, so that the object of the present invention can be achieved.

**Claims**

1. A lithium-sulfur battery comprising a positive electrode containing sulfur as a positive electrode active material, a lithium metal negative electrode, and an electrolyte, wherein the battery satisfies Equation 1 below:

[Equation 1]

$$1 \leq ES/L \leq 1.4$$

wherein ES is the value obtained by dividing the mass (g) of the electrolyte by the mass (g) of sulfur contained in the positive electrode, and L is the loading value of sulfur for the positive electrode and its unit is mAh/cm$^2$.

2. The lithium-sulfur battery according to claim 1, wherein the energy density of the lithium-sulfur battery is 300 Wh/kg or more, and at the same time, the maximum power is 2 kW/kg or more.

3. The lithium-sulfur battery according to claim 1, wherein the value of ES is $2 \leq ES < 3.7$.

4. The lithium-sulfur battery according to claim 3, wherein the value of L is $2 \leq L \leq 2.6$.

5. The lithium-sulfur battery according to claim 4, wherein when the value of L is $2 \leq L < 2.5$, the energy density of the battery is 300 Wh/kg or more and less than 350 Wh/kg, and at that time, the power value is 2 to 2.6 kW/kg.

6. The lithium-sulfur battery according to claim 4, wherein when the L value is $2.5 \leq L \leq 2.6$, the energy density of the battery is 300 to 350 Wh/kg, and at that time, the power value is from exceeding 2 kW/kg to 2.6 kW/kg.

7. The lithium-sulfur battery according to claim 6, wherein when the value of ES/L is 1 and the value of L is $2.5 \leq L \leq 2.6$, the energy density of the battery is 350 Wh/kg, and at that time, the power value is from exceeding 2 kW/kg to 2.3 kW/kg.

8. The lithium-sulfur battery according to claim 1, wherein the positive electrode active material comprises a sulfur-carbon composite.

9. The lithium-sulfur battery according to claim 8, wherein the positive electrode comprises a positive electrode active material and a binder, and does not comprise an electrically conductive material.

10. The lithium-sulfur battery according to claim 1, wherein the sulfur is contained in an amount of 60 to 80% by weight based on the total weight of the positive electrode.

11. The lithium-sulfur battery according to claim 1, wherein the electrolyte contains a first solvent comprising a heterocyclic compound containing at least one double bond and at the same time containing any one of an oxygen atom and a sulfur atom; a second solvent comprising at least one of an ether-based compound, an ester-based compound, an amide-based compound, and a carbonate-based compound; and lithium salt.

12. The lithium-sulfur battery according to claim 1, wherein the lithium-sulfur battery is a battery for aircraft used as an urban air mobility (UAM).

**Patentansprüche**

1. Lithium-Schwefel-Batterie, umfassend eine positive Elektrode, die Schwefel als Positivelektrodenaktivmaterial enthält, eine negative Lithiummetall-Elektrode und einen Elektrolyten, wobei die Batterie die nachstehende Gleichung 1 erfüllt:

[Gleichung 1]

$$1 \leq ES/L \leq 1{,}4,$$

wobei ES der Wert ist, der durch Dividieren der Masse (g) des Elektrolyten durch die Masse (g) von Schwefel, der in der positiven Elektrode enthalten ist, erhalten wird, und L der Beladungswert von Schwefel für die positive Elektrode ist und seine Einheit mAh/cm$^2$ ist.

2. Lithium-Schwefel-Batterie nach Anspruch 1, wobei die Energiedichte der Lithium-Schwefel-Batterie 300 Wh/kg oder mehr beträgt und gleichzeitig die maximale Leistung 2 kW/kg oder mehr beträgt.

3. Lithium-Schwefel-Batterie nach Anspruch 1, wobei der Wert von ES 2 ≤ ES < 3,7 beträgt.

4. Lithium-Schwefel-Batterie nach Anspruch 3, wobei der Wert von L 2 ≤ L ≤ 2,6 beträgt.

5. Lithium-Schwefel-Batterie nach Anspruch 4, wobei, wenn der Wert von L 2 ≤ L < 2,5 beträgt, die Energiedichte der Batterie 300 Wh/kg oder mehr und weniger als 350 Wh/kg beträgt und zu diesem Zeitpunkt der Leistungswert 2 bis 2,6 kW/kg beträgt.

6. Lithium-Schwefel-Batterie nach Anspruch 4, wobei, wenn der Wert von L 2,5 ≤ L ≤ 2,6 beträgt, die Energiedichte der Batterie 300 bis 350 Wh/kg beträgt und zu diesem Zeitpunkt der Leistungswert von mehr als 2 kW/kg bis 2,6 kW/kg beträgt.

7. Lithium-Schwefel-Batterie nach Anspruch 6, wobei, wenn der Wert von ES/L 1 beträgt und der Wert von L 2,5 ≤ L ≤ 2,6 beträgt, die Energiedichte der Batterie 350 Wh/kg beträgt und zu diesem Zeitpunkt der Leistungswert von mehr als 2 kW/kg bis 2,3 kW/kg beträgt.

8. Lithium-Schwefel-Batterie nach Anspruch 1, wobei das Positivelektrodenaktivmaterial einen Schwefel-Kohlenstoff-Verbundstoff umfasst.

9. Lithium-Schwefel-Batterie nach Anspruch 8, wobei die positive Elektrode ein Positivelektrodenaktivmaterial und ein Bindemittel umfasst und kein elektrisch leitfähiges Material umfasst.

10. Lithium-Schwefel-Batterie nach Anspruch 1, wobei der Schwefel in einer Menge von 60 bis 80 Gew.-%, bezogen auf das Gesamtgewicht der positiven Elektrode, enthalten ist.

11. Lithium-Schwefel-Batterie nach Anspruch 1, wobei der Elektrolyt ein erstes Lösungsmittel, das eine heterocyclische Verbindung umfasst, die mindestens eine Doppelbindung enthält und gleichzeitig ein beliebiges von einem Sauerstoffatom und einem Schwefelatom enthält; ein zweites Lösungsmittel, das mindestens eines von einer Verbindung auf Etherbasis, einer Verbindung auf Esterbasis, einer Verbindung auf Amidbasis und einer Verbindung auf Carbonatbasis umfasst; und Lithiumsalz enthält.

12. Lithium-Schwefel-Batterie nach Anspruch 1, wobei die Lithium-Schwefel-Batterie eine Batterie für Flugzeuge ist, die als städtische Luftmobilität (UAM) verwendet werden.

## Revendications

1. Batterie au lithium-soufre comprenant une électrode positive contenant du soufre en tant que matériau actif d'électrode positive, une électrode négative au lithium métallique, et un électrolyte, la batterie répondant à l'équation 1 ci-dessous :

$$[\text{Équation 1}]$$

$$1 \leq ES/L \leq 1,4$$

ES étant la valeur obtenue en divisant la masse (g) de l'électrolyte par la masse (g) du soufre contenu dans l'électrode positive, et L étant la valeur de charge du soufre pour l'électrode positive, son unité étant mAh/cm$^2$.

2. Batterie au lithium-soufre selon la revendication 1, la densité d'énergie de la batterie au lithium-soufre étant 300 Wh/kg ou davantage, et, dans le même temps, la puissance maximum étant 2 kW/kg ou davantage.

**3.** Batterie au lithium-soufre selon la revendication 1, la valeur d'ES étant 2≤ES/L<3,7.

**4.** Batterie au lithium-soufre selon la revendication 3, la valeur de L étant 2≤L≤2,6.

**5.** Batterie au lithium-soufre selon la revendication 4, la valeur de L étant 2≤L<2,5, la densité d'énergie de la batterie étant 300 Wh/kg ou davantage, et inférieure à 350 Wh/kg, et, à ce moment, la valeur de puissance étant comprise entre 2 et 2,6 kW/kg.

**6.** Batterie au lithium-soufre selon la revendication 4, la valeur de L étant 2,5≤L≤2,6, la densité d'énergie étant comprise entre 300 et 350 Wh/kg, et, à ce moment, la valeur de puissance étant comprise entre 2 kW/kg et 2,6 kW/kg.

**7.** Batterie au lithium-soufre selon la revendication 6, la valeur de ES/L étant 1, et la valeur de L étant 2,5≤L≤2,6, la densité d'énergie de la batterie étant 350 Wh/kg, et, à ce moment, la valeur de puissance allant de plus de 2 kW/kg à 2,3 kW/kg.

**8.** Batterie au lithium-soufre selon la revendication 1, le matériau actif de l'électrode positive comprenant un composite soufre-carbone.

**9.** Batterie au lithium-soufre selon la revendication 8, l'électrode positive comprenant un matériau actif d'électrode positive et un liant, et ne comprenant pas un matériau électro-conducteur.

**10.** Batterie au lithium-soufre selon la revendication 1, contenant de 60 à 80% en poids de soufre en fonction du poids total de l'électrode positive.

**11.** Batterie au lithium-soufre selon la revendication 1, l'électrolyte contenant un premier solvant comprenant un composé hétérocyclique contenant au moins une double liaison, et, dans le même moment, contenant un quelconque d'un atome d'oxygène et d'un atome de soufre ; un deuxième solvant comprenant au moins un d'un composé à base d'éther, d'un composé à base d'ester, d'un composé à base d'amide, et d'un composé à base de carbonate ; et du sel de lithium.

**12.** Batterie au lithium-soufre selon la revendication 1, la batterie au lithium-soufre étant une batterie pour aéronefs utilisés comme une mobilité aérienne urbaine (UAM).

【Figure 1】

【Figure 2】

【Figure 3】

【Figure 4】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210161896